(19) Europäisches Patentamt
European Patent Office
Office européen des brevets

(11) **EP 3 235 032 B1**

(12) **FASCICULE DE BREVET EUROPEEN**

(45) Date de publication et mention
de la délivrance du brevet:
**20.05.2020 Bulletin 2020/21**

(21) Numéro de dépôt: **15820470.1**

(22) Date de dépôt: **17.12.2015**

(51) Int Cl.:
*H01M 8/04029* *(2016.01)*   *H01M 8/04223* *(2016.01)*
*H01M 8/0432* *(2016.01)*   *H01M 8/04746* *(2016.01)*
*H01M 8/04119* *(2016.01)*   *H01M 8/1018* *(2016.01)*
*H01M 8/04302* *(2016.01)*   *H01M 8/04303* *(2016.01)*
*H01M 8/04701* *(2016.01)*

(86) Numéro de dépôt international:
**PCT/EP2015/080171**

(87) Numéro de publication internationale:
**WO 2016/097113 (23.06.2016 Gazette 2016/25)**

(54) **PROCÉDÉ DE PILOTAGE DE PILE À COMBUSTIBLE**

VERFAHREN ZUR STEUERUNG EINER BRENNSTOFFZELLE

METHOD FOR CONTROLLING A FUEL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1462902**

(43) Date de publication de la demande:
**25.10.2017 Bulletin 2017/43**

(73) Titulaire: **Compagnie Générale des Etablissements Michelin**
**63000 Clermont-Ferrand (FR)**

(72) Inventeurs:
• **BRAILLARD, Vincent**
**63040 Clermont-Ferrand Cedex 9 (FR)**
• **PAGANELLI, Gino**
**63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**US-A1- 2003 017 375    US-A1- 2007 178 342**
**US-A1- 2012 003 557    US-A1- 2012 100 449**

EP 3 235 032 B1

**EP 3 235 032 B1**

**Description**

DOMAINE DE L'INVENTION

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

Plus particulièrement, la présente invention se rapporte à l'utilisation de telles piles à combustible dans des conditions de température particulièrement froides, et aux stratégies de démarrage de telles piles dans ces conditions. Une telle stratégie est décrite dans le document US2007/0178342 A1 où un refroidissement de manière impulsionnel est appliqué lors du démarrage de la pile à combustible.

BREVE DESCRIPTION DE L'INVENTION

On sait que les piles à combustibles permettent la production directe d'énergie électrique par une réaction électrochimique d'oxydoréduction à partir d'un gaz carburant et d'un gaz comburant, sans passer par une conversion en énergie mécanique. Cette technologie semble prometteuse notamment pour des applications automobiles. Une pile à combustible comporte un empilement de cellules de base, chacune comprenant une anode, une cathode et une membrane échangeuse d'ions, faisant office d'électrolyte. Lors du fonctionnement d'une pile à combustible, deux réactions électrochimiques simultanées se produisent : une oxydation du carburant à l'anode, et une réduction de comburant à la cathode. Ces deux réactions produisent des ions, positifs et négatifs, qui se combinent au niveau de la membrane et produisent de l'électricité sous la forme d'une différence de potentiels. Dans le cas d'une pile à combustible oxygène-hydrogène, ce sont les ions H+ et O- qui se combinent.

Les assemblages membrane-électrodes, ou cellules, sont empilés en séries et séparés par une plaque bipolaire qui conduit les électrons de l'anode d'une cellule à la cathode de la cellule voisine. A cet effet, des canaux sont prévus sur les deux faces des plaques bipolaires en contact avec les assemblages membrane-électrode. Chaque canal possède une entrée par laquelle pénètre le carburant ou le comburant, et une sortie par laquelle sont évacués les gaz en excès et l'eau générée par la réaction électrochimique.

Les piles à combustibles sont destinées à de nombreuses applications, notamment des applications mobiles. Dans ce cas, elles peuvent être amenées à fonctionner dans des conditions de température extrêmes. Ainsi, lorsque la température extérieure devient très négative, par exemple de l'ordre de -20°C, la température interne de la pile à combustible diminue également, jusqu'à atteindre parfois une température inférieure à 0°C à pression atmosphérique. L'objectif d'une procédure de démarrage à froid de pile à combustible est d'élever la température interne de la pile à combustible au-dessus du point de congélation de l'eau avant que la pile à combustible ne commence à rejeter l'eau générée par la réaction électrochimique.

Il est donc utile de mettre en œuvre une procédure de pilotage de pile à combustible permettant de garantir l'intégrité de la pile même en cas d'utilisation à basse température. On connait ainsi des procédures de pilotage qui consistent à effectuer, après l'extinction précédant le démarrage, une opération de séchage pour supprimer l'eau restant dans les circuits de la pile à combustible. Cela permet d'éviter tout gel des circuits pendant les phases d'arrêt de la pile à combustible.

Toutefois, dans le cas de températures particulièrement négatives, cette opération de séchage ne suffit pas à éviter la dégradation de la pile. En effet, si la pile démarre sans autre assistance que ce séchage préalable, seules les pertes thermiques de la pile à combustible pourront être utilisées pour élever sa propre température. Or, l'inertie thermique d'une pile à combustible, et de son circuit de refroidissement, est trop forte pour être vaincue uniquement à l'aide des pertes thermiques.

Pour remédier à cela, on connaît une solution qui consiste à différer la mise en circulation du liquide de refroidissement, de façon à ne devoir réchauffer que le volume d'eau contenu dans l'empilement, et non pas dans la partie externe d'un circuit de refroidissement primaire de la pile à combustible, comprenant notamment des tuyaux, une pompe de refroidissement et une vanne thermostatique.

Toutefois, cette solution présente plusieurs inconvénients. Le premier est le report de la mise en circulation du liquide de refroidissement conduit à des surchauffes locales de la pile à combustible qui n'est pas refroidie. Le second est qu'il n'est pas possible, dans une telle solution, de déterminer la température interne de la pile à combustible. En effet, les capteurs de température sont généralement placés dans le circuit de refroidissement de la pile à combustible. Or, si le circuit de refroidissement n'est pas en fonction, il est impossible d'obtenir la mesure de la température interne de l'empilement.

Par ailleurs, on a constaté que, dans les procédés de démarrage connus de l'état de la technique, une injection de liquide de refroidissement très froid pouvait conduire à une baisse notable de la tension aux bornes des cellules de la pile à combustible.

La présente invention vise donc à proposer un procédé qui permette d'effectuer un démarrage à froid d'une pile à combustible en préservant l'intégrité de la pile, et en remédiant aux inconvénients de l'art antérieur.

Ainsi, l'invention concerne un procédé de pilotage de pile à combustible à membrane échangeuse d'ions, la pile étant installée dans un système comprenant en outre un circuit de refroidissement liquide et une pompe de circulation du liquide de refroidissement, le procédé comprenant une phase de démarrage de la pile à combustible, cette phase de démarrage comprenant les étapes suivantes :

- on détermine la température interne de la pile à combustible
- on mesure la température dans le circuit de refroidissement liquide,
- on applique à la pile à combustible un courant de démarrage et, parallèlement

    o lorsque la température interne de la pile est supérieure à un premier seuil prédéterminé, et que la température du liquide de refroidissement avant son entrée dans l'empilement est inférieure à un second seuil prédéterminé, on commande la pompe de refroidissement de manière impulsionnelle, et lorsque la température dans le circuit de refroidissement devient supérieure au second seuil prédéterminé, on commande la pompe de refroidissement en mode continu.

La température interne de la pile est une estimation de la température de cœur de pile. Le choix du premier seuil prédéterminé est effectué de manière à ce que le liquide de refroidissement ne soit pas mis en mouvement trop tôt, ce qui pourrait conduire à un risque de choc thermique et ainsi au gel de l'eau produite dans la pile encore froide. Le choix du second seuil est effectué de manière à éviter toute surchauffe locale de la pile à combustible non refroidie, sans toutefois créer de chute de tension aux bornes des cellules de la pile.

En effet, l'activation impulsionnelle de la pompe de refroidissement permet d'instiller progressivement de l'eau encore froide dans l'empilement, et ainsi de maintenir une tension acceptable aux bornes des cellules de la pile à combustible.

Dans un autre mode de réalisation, alternativement au pilotage en mode impulsionnel, à une pompe de refroidissement à vitesse variable avec une capacité de très faible débit. Toutefois la viscosité du liquide de refroidissement à très basse température est très élevée et un faible débit est difficilement réalisable avec une pompe de refroidissement classique conçue pour un liquide moins visqueux et un débit bien plus important. Le pilotage en mode impulsionnel permet d'atteindre la finesse nécessaire sur le réglage du débit moyen sans devoir recourir à une pompe très élaborée. Le pilotage en mode impulsionnel permet en outre de mieux garantir que le liquide se met bien en mouvement.

Selon les réalisations, le premier seuil est fixé à 20°C à pression atmosphérique, et le second seuil est fixé à 5°C à pression atmosphérique.

Dans une réalisation avantageuse, la détermination de la température interne de la pile est effectuée en prenant en compte la capacité calorifique et la masse des matériaux constituant la pile, et l'énergie thermique dissipée par la pile. Ainsi, on utilise par exemple une formule du type

$$\text{Teta\_FC} = \sum_{k=0}^{n} \frac{((\text{UCell}_{LHV} \cdot \text{NbCell}) - U_{FC}) \cdot I_{FC}}{M_1 \cdot C_1 + M_2 \cdot C_2} + \text{Teta}_{init}$$

$$UCell_{LHV} = \frac{MW_{H2} \cdot LHV \cdot 1000}{2 \cdot F} = 1.2531V$$

Avec :

Teta_FC : température estimée de la PEMFC [°C]
NbCell : Nombre de cellules composant le stock [16]
UFC: Tension totale sur le stack [V]
IFC: Courant stack [A]
M1 : Masse du liquide de refroidissement interne à la PEMFC [kg]
C1 : Capacité calorifique du liquide de refroidissement [J/kgK]
M2 : Masse des plaques bipolaires [kg]
C2 : Capacité calorifique des plaques bipolaires [J/kgK]

Dans une réalisation particulière, le courant de démarrage appliqué est une rampe de 0.015A/cm2/s, avec une valeur maximale de 0.5A/cm2. Ceci correspond, pour une pile de 200 cm$^2$ à un courant de 100A. Toutefois, dans certaines situations, l'application d'une telle rampe peut conduire à une baisse importante de la tension aux bornes des cellules de la pile à combustible. Pour éviter un tel écroulement, et ses conséquences sur le fonctionnement de la pile, on adapte, dans une réalisation particulière, le courant appliqué, de manière à garantir que la tension aux bornes de chacune des cellules soit supérieure ou égale à 0,2 volts. Ceci est réalisé à l'aide d'un régulateur qui transmet une valeur de courant maximum à une unité de pilotage de la puissance délivrée par la pile à combustible, tel un DCDC par exemple.

Dans une autre réalisation encore, le procédé de pilotage de la pile à combustible comporte une phase de séchage préalable de la pile à combustible avec l'air ambiant, cette phase de séchage ayant lieu avant que température ambiante ne devienne inférieure à 0°C. Dans une réalisation, cette température est fixée à 5°C.

La pompe est pilotée de manière à ce que le temps d'activation soit constant. Celui-ci est fixé au minimum requis pour garantir la mise en mouvement du fluide de refroidissement dans toutes les circonstances. Il dépend de la dynamique de la pompe et des pertes de charges dans le circuit de la pile. Par exemple la durée de fonctionnement est fixée à 0.6 secondes. Le temps d'arrêt de la pompe entre 2 impulsions est variable. On attend que le modèle de température de la pile retourne une valeur de température supérieure de 1°C par rapport à l'impulsion précédente de façon à engendrer une élévation progressive de la température du cœur de la pile à combustible. Le temps entre 2 impulsions est en outre limité entre un temps minimum de 2 secondes et un temps maximum de 12 secondes. Dans une autre réalisation, la durée d'arrêt de la pompe est déterminée de manière à garantir que la tension moyenne aux bornes des cellules de la pile redevienne supérieure à une valeur prédéterminée entre deux impulsions, par exemple 0.6V. En effet chaque impulsion provoque l'introduction d'une petite quantité de liquide de refroidissement encore très froide et provoquant un abaissement de la tension des cellules.

Dans un exemple de réalisation correspondant à une pile à combustible de 16 cellules de 200cm2, ce séchage à l'air est effectué en utilisant les paramètres suivants :

- Le séchage est effectué avec de l'air ambiant soufflé par un compresseur

- Au niveau de l'anode, l'air est envoyé avec un débit de 15 litres par minute,

- Au niveau de la cathode, l'air est envoyé avec un débit de 85 litres par minute,

- Le séchage est effectué lorsque la température ambiante devient inférieure à 5°C; et il s'arrête lorsque l'impédance de l'empilement, mesurée à 1kHz, atteint la valeur de 40 milliOhm.

- En outre, le séchage est réalisé préférentiellement après une période de fonctionnement de la pile juste avant sa dernière extinction à une stœchiométrie cathode supérieure ou égale à 2,8, et de préférence sans humidification.

- Dans ces conditions, le séchage est effectué en moins de 90 secondes. Dans d'autres conditions, par exemple si la stœchiométrie préalable était de 2, le temps de séchage deviendrait alors égal à environ 7 minutes.

BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :

• la figure 1 représente les tensions aux bornes des cellules d'une pile à combustible dans le cas où la pompe de refroidissement est activée en continu pendant une phase de démarrage à froid.

• La figure 2 représente l'évolution de plusieurs températures au sein de la pile à combustible dans le cas où la pompe de refroidissement est démarrée en différé, et activée de manière impulsionnelle pendant une phase de démarrage à froid.

• la figure 3 représente les tensions aux bornes des cellules d'une pile à combustible dans le cas où la pompe de refroidissement est démarrée en différé, et activée de manière impulsionnelle pendant une phase de démarrage à froid.

DESCRIPTION DU MEILLEUR MODE DE REALISATION DE L'INVENTION

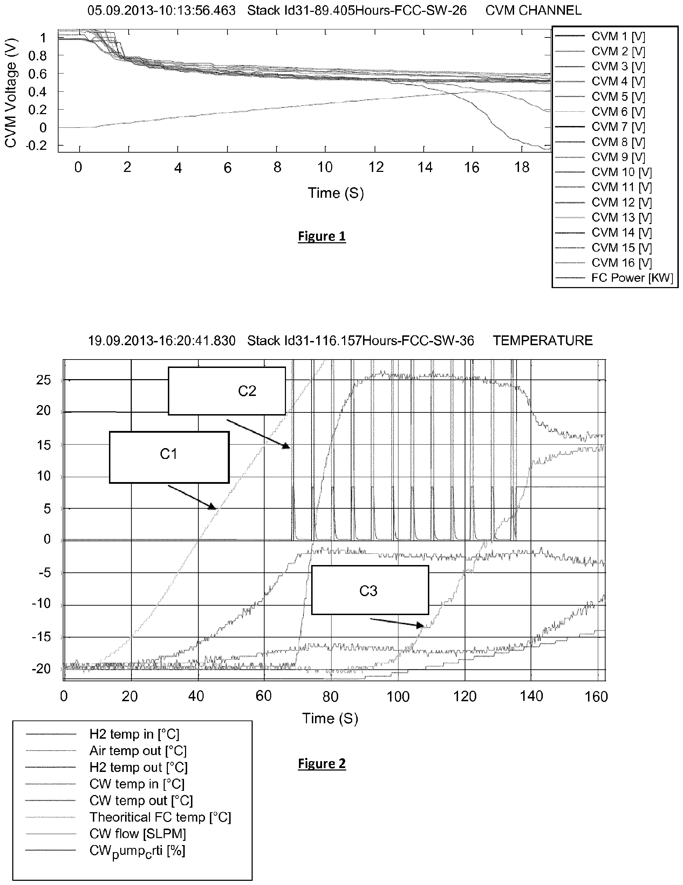

La figure 1 montre l'évolution des tensions aux bornes des cellules d'une pile à combustible, lors d'un démarrage à froid à -15°C piloté selon les procédés de l'état de la technique, à savoir en opérant la pompe de refroidissement en continu.

On constate une diminution progressive de la tension aux bornes de l'ensemble des cellules, suivie par un écroulement, à partir de la 13ème seconde, de la tension aux bornes de la première cellule (courbe la plus basse sur le graphe), suivie peu après par la tension aux bornes de la deuxième cellule.

Cette chute de tension rapide est révélatrice d'un blocage lié au gel de l'eau produite dans la pile à combustible. Par conséquent, le fonctionnement de la pile est dégradé.

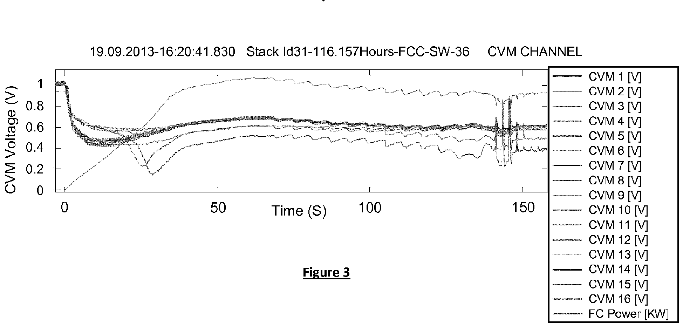

Les figures 2 et 3 représentent l'évolution de paramètres dans une pile à combustible pour laquelle un procédé de pilotage selon l'invention est mis en œuvre. Ainsi, ces deux graphes montrent l'évolution lors d'un démarrage à froid au cours duquel la pile est d'abord opérée sans aucune circulation de liquide de refroidissement, puis la pompe de refroidissement est opérée de manière impulsionnelle.

Sur la figure 2, la courbe C1 représente la température estimée de la pile à combustible, la courbe C2 représente la consigne de pilotage de la pompe de refroidissement, et la courbe C3 représente la température à l'entrée de l'empilement. Après environ 65 secondes, la température, montrée en courbe C1, atteint une valeur de 20°C. Cette valeur correspondant à un premier seuil prédéterminé dans une réalisation de l'invention, la pompe de refroidissement, ou pompe à eau, est alors pilotée en mode impulsionnel, ainsi que montré sur la courbe C2.

Après 135 secondes de fonctionnement, la température du liquide de refroidissement en entrée de la pile, montrée sur la courbe C3, devient supérieure à 5°C. Cette valeur correspondant à un second seuil prédéterminé dans une réalisation de l'invention, la pompe de refroidissement est alors opérée en continu. A partir de cet instant, le liquide de refroidissement circule en continu, ce qui provoque assez rapidement la diminution puis l'annulation de l'écart de température du liquide de refroidissement entre l'entrée et la sortie de la pile à combustible.

Dans le même temps, la figure 3 montre l'évolution correspondante des tensions individuelles des cellules de la pile à combustible lorsqu'un procédé selon l'invention est mis en œuvre On constate sur cette figure que, contrairement à la figure 1, les premières cellules de la pile à combustible conservent un niveau de tension acceptable, voire remontent rapidement lors de l'activation de la pompe de refroidissement. La pompe de refroidissement est activée de manière impulsionnelle. On constate que chaque injection d'eau froide provoque une baisse de l'ensemble des tensions, représentée sur la figure 3 par des oscillations. La fréquence des impulsions de la pompe de refroidissement, et donc de l'injection de liquide de refroidissement, est déterminée de manière à laisser le temps à la tension aux bornes des cellules de retrouver un niveau acceptable avant une nouvelle injection. Dans le présent exemple, une injection a lieu toutes les 0,6 secondes.

Un tel procédé de pilotage permet de concilier un réchauffement du liquide contenu dans le circuit de refroidissement, tout en maintenant une tension acceptable aux bornes des cellules de la pile à combustible tout au long de la phase de démarrage.

## Revendications

1. Procédé de pilotage de pile à combustible à membrane échangeuse d'ions, la pile étant installée dans un système comprenant en outre un circuit de refroidissement liquide et une pompe de circulation du liquide de refroidissement, le procédé comprenant une phase de démarrage de la pile à combustible, cette phase de démarrage comprenant les étapes suivantes :

   • on détermine la température interne de la pile à combustible en prenant en compte la capacité calorifique et la masse des matériaux constituant la pile, et l'énergie thermique dissipée par la pile,
   • on mesure la température dans le circuit de refroidissement liquide,
   • on applique à la pile à combustible un courant de démarrage et, parallèlement

      o lorsque la température interne de la pile est supérieure à un premier seuil prédéterminé, et que la température du circuit de refroidissement est inférieure à un second seuil prédéterminé, on commande la pompe de refroidissement de manière impulsionnelle, et
      o lorsque la température dans le circuit de refroidissement devient supérieure au second seuil prédéterminé, on commande la pompe de refroidissement en mode continu.

2. Procédé de pilotage selon la revendication 1, dans lequel le premier seuil est fixé à 20°C à pression atmosphérique.

3. Procédé de pilotage selon la revendication 1 ou 2, dans lequel le second seuil est fixé à 5°C à pression atmosphérique.

4. Procédé de pilotage selon l'une des revendications précédentes, dans lequel la détermination de la température interne de la pile est effectuée en prenant en compte la capacité calorifique et la masse des matériaux constituant la pile, et l'énergie thermique dissipée par la pile.

**5.** Procédé de pilotage selon l'une des revendications précédentes, dans lequel le courant de démarrage est appliqué selon une rampe de 0.015A/cm2/s limitée à 0.5A/cm2.

**6.** Procédé de pilotage de pile à combustible selon l'une des revendications précédentes, **caractérisé en ce qu'**il comprend une phase de séchage de la pile à combustible, cette phase de séchage ayant lieu après chaque extinction de la pile à combustible.

**7.** Procédé de pilotage de pile à combustible selon l'une des revendications précédentes, **caractérisé en ce que** la fréquence d'activation de la pompe lorsqu'elle est en mode impulsionnel est déterminée de manière à garantir que la température interne de la pile à combustible s'élève d'une valeur prédéterminée entre 2 impulsions.

**Patentansprüche**

**1.** Verfahren zur Steuerung einer Brennstoffzelle mit Ionenaustauschermembran, wobei die Zelle in einem System installiert ist, das außerdem einen Flüssigkeitskühlkreislauf und eine Umwälzpumpe für die Kühlflüssigkeit umfasst, wobei das Verfahren eine Startphase der Brennstoffzelle umfasst, wobei diese Startphase die folgenden Schritte umfasst:

• es wird die Innentemperatur der Brennstoffzelle unter Berücksichtigung der Wärmekapazität und der Masse der Materialien, aus denen die Zelle besteht, und der von der Zelle dissipierten Wärmeenergie bestimmt,
• es wird die Temperatur im Flüssigkeitskühlkreislauf gemessen,
• es wird ein Startstrom an die Brennstoffzelle angelegt, und parallel dazu wird,

o wenn die Innentemperatur der Zelle höher als ein erster vorbestimmter Schwellenwert ist und wenn die Temperatur des Kühlkreislaufs niedriger als ein zweiter vorbestimmter Schwellenwert ist, die Kühlpumpe im Impulsbetrieb gesteuert, und
o wenn die Temperatur im Kühlkreislauf höher als der zweite vorbestimmte Schwellenwert wird, die Kühlpumpe im kontinuierlichen Modus gesteuert.

**2.** Verfahren zur Steuerung nach Anspruch 1, wobei der erste Schwellenwert auf 20 °C bei atmosphärischem Druck festgelegt ist.

**3.** Verfahren zur Steuerung nach Anspruch 1 oder 2, wobei der zweite Schwellenwert auf 5 °C bei atmosphärischem Druck festgelegt ist.

**4.** Verfahren zur Steuerung nach einem der vorhergehenden Ansprüche, wobei die Bestimmung der Innentemperatur der Zelle unter Berücksichtigung der Wärmekapazität und der Masse der Materialien, aus denen die Zelle besteht, und der von der Zelle dissipierten Wärmeenergie durchgeführt wird.

**5.** Verfahren zur Steuerung nach einem der vorhergehenden Ansprüche, wobei der Startstrom in Form einer Rampe von 0,015 A/cm2/s angelegt wird, begrenzt auf 0,5 A/cm2.

**6.** Verfahren zur Steuerung einer Brennstoffzelle nach einem der vorhergehenden Ansprüche, **dadurch gekennzeichnet, dass** es eine Phase der Trocknung der Brennstoffzelle umfasst, wobei diese Phase der Trocknung nach jeder Extinktion der Brennstoffzelle stattfindet.

**7.** Verfahren zur Steuerung einer Brennstoffzelle nach einem der vorhergehenden Ansprüche, **dadurch gekennzeichnet, dass** die Aktivierungsfrequenz der Pumpe, wenn sie im Impulsbetrieb arbeitet, so bestimmt wird, dass garantiert wird, dass sich die Innentemperatur der Brennstoffzelle zwischen 2 Impulsen um einen vorbestimmten Wert erhöht.

**Claims**

**1.** Method for controlling an ion exchange membrane fuel cell stack, the stack being installed in a system additionally comprising a liquid cooling circuit and a pump for circulating the coolant liquid, the method comprising a phase of starting up the fuel cell stack, this start-up phase comprising the following steps:

- the internal temperature of the fuel cell stack is determined while taking account of the heat capacity and the mass of the materials constituting the stack, and the thermal energy dissipated by the stack;
- the temperature in the liquid cooling circuit is measured;
- a start-up current is applied to the fuel cell stack and, in parallel;

  o when the internal temperature of the stack is above a first predetermined threshold, and the temperature of the cooling circuit is below a second predetermined threshold, the cooling pump is ordered to operate in pulsed mode; and
  o when the temperature in the cooling circuit rises above the second predetermined threshold, the cooling pump is ordered to operate in continuous mode.

2.  Control method according to Claim 1, in which the first threshold is set to 20°C at atmospheric pressure.

3.  Control method according to Claim 1 or 2, in which the second threshold is set to 5°C at atmospheric pressure.

4.  Control method according to one of the preceding claims, in which the internal temperature of the stack is determined while taking account of the heat capacity and the mass of the materials constituting the stack, and the thermal energy dissipated by the stack.

5.  Control method according to one of the preceding claims, in which the start-up current is applied according to a ramp from 0.015 A/cm$^2$/s limited to 0.5 A/cm$^2$.

6.  Method for controlling a fuel cell stack according to one of the preceding claims, **characterized in that** it comprises a phase of drying out the fuel cell stack, this dry-out phase taking place after each shut-down of the fuel cell stack.

7.  Method for controlling a fuel cell stack according to one of the preceding claims, **characterized in that** the activation frequency of the pump when it is in pulsed mode is determined so as to guarantee that the internal temperature of the fuel cell stack rises by a predetermined value between two pulses.

05.09.2013-10:13:56.463    Stack Id31-89.405Hours-FCC-SW-26    CVM CHANNEL

| | CVM 1 [V] |
| | CVM 2 [V] |
| | CVM 3 [V] |
| | CVM 4 [V] |
| | CVM 5 [V] |
| | CVM 6 [V] |
| | CVM 7 [V] |
| | CVM 8 [V] |
| | CVM 9 [V] |
| | CVM 10 [V] |
| | CVM 11 [V] |
| | CVM 12 [V] |
| | CVM 13 [V] |
| | CVM 14 [V] |
| | CVM 15 [V] |
| | CVM 16 [V] |
| | FC Power [KW] |

Figure 1

19.09.2013-16:20:41.830    Stack Id31-116.157Hours-FCC-SW-36    TEMPERATURE

| | H2 temp in [°C] |
| | Air temp out [°C] |
| | H2 temp out [°C] |
| | CW temp in [°C] |
| | CW temp out [°C] |
| | Theoritical FC temp [°C] |
| | CW flow [SLPM] |
| | $CW_pump_crti$ [%] |

Figure 2

19.09.2013-16:20:41.830   Stack Id31-116.157Hours-FCC-SW-36     CVM CHANNEL

**Figure 3**

**EP 3 235 032 B1**

## RÉFÉRENCES CITÉES DANS LA DESCRIPTION

**Documents brevets cités dans la description**

- US 20070178342 A1